# EUROPÄISCHE PATENTANMELDUNG

(11) **EP 4 475 235 A1**
(43) Veröffentlichungstag der Anmeldung: **11.12.2024**
(21) Anmeldenummer: 23177985.1
(22) Anmeldetag: 07.06.2023
(51) Int. Cl.: H01M 6/50, H01M 8/04029, H01M 8/04186, H01M 8/04276, H01M 8/18

(54) **ELEKTRISCHE ENERGIEQUELLE**

(71) Anmelder: Primetals Technologies Germany GmbH, 91058 Erlangen (DE)
(72) Erfinder: Weinzierl, Klaus, 90480 Nürnberg (DE)
(74) Vertreter: Metals@Linz

(57) **Zusammenfassung**

Eine elektrische Energiequelle weist zwei Flussbatterien (1, 2) auf, die jeweils erste und zweite Pole (3 bis 6) aufweisen. Die ersten Pole (3, 4) sind elektrisch miteinander verbunden. An den zweiten Polen (5, 6) ist ein jeweiliges Nutzpotenzial (P1, P2) abgreifbar. Die Nutzpotenziale (P1, P2) weisen, bezogen auf die ersten Pole (3, 4), das gleiche Vorzeichen auf. Die beiden Flussbatterien (1, 2) weisen jeweils einen Reaktionsraum (7, 8) auf, wobei die Reaktionsräume (7, 8) jeweils eine Membran (9, 10) aufweisen, welche den jeweiligen Reaktionsraum (7, 8) in zwei Fluidräume (11 bis 14) trennt. Die Membranen (9, 10) sind für einen Übergang elektrischer Ladungsträger zwischen den Fluidräumen (11 bis 14) des jeweiligen Reaktionsraums (7, 8) permeabel. Die elektrische Energiequelle weist zwei voneinander getrennte Kreisläufe (17, 18) für eine jeweilige Elektrolytflüssigkeit (15, 16) auf. Die Kreisläufe (17, 18) sind geschlossene Kreisläufe, die je einen der Fluidräume (11, 14) der zwei Reaktionsräume (7, 8) miteinander verbinden, so dass die Elektrolytflüssigkeiten (15, 16) alternierend je einen der Fluidräume (11, 12) des einen Reaktionsraums (7) und je einen der Fluidräume (13, 14) des anderen Reaktionsraums (8) durchströmen. Die beiden Kreisläufe (17, 18) weisen eingangsseitig der Reaktionsräume (7, 8) Wärmetauscher (25 bis 28) auf, mittels derer die Elektrolytflüssigkeiten (15, 16) auf eine jeweilige Temperatur (T1, T2) gebracht werden, wobei eine der beiden Temperaturen (T1, T2) höher als die andere ist.

## Beschreibung

### Gebiet der Technik

Die vorliegende Erfindung betrifft eine elektrische Energiequelle.

### Stand der Technik

Elektrische Energiequellen sind in verschiedensten Ausgestaltungen bekannt. Beispiele derartiger Energiequellen sind Generatoren, Fotozellen, Batterien, Akkumulatoren und andere mehr.

Aus dem Eintrag "Redox-Flow-Batterie" in der deutschen Wikipedia, abgerufen am 27.04.2023, ist eine Flussbatterie bekannt. Eine Flussbatterie ist eine Ausführungsform eines Akkumulators. Bei einer Flussbatterie wird die elektrische Energie in chemischen Verbindungen gespeichert, wobei die Reaktionspartner in einem Lösungsmittel in gelöster Form vorliegen. Die elektrische Energie wird also in Elektrolyten gespeichert. Die Elektrolyte werden in zwei voneinander getrennten Kreisläufen geführt, wobei in einer galvanischen Zelle mittels einer Membran der lonenaustausch erfolgt. In der Zelle werden die in den Elektrolyten gelösten Stoffe chemisch reduziert bzw. oxidiert, wobei zum Laden der Flussbatterie elektrische Energie benötigt wird und beim Entladen elektrische Energie frei wird.

Aus einem Eintrag im Internet, den die Anmelderin am 26.04.2023 aus dem Internet unter der URL https://www.sandia.gov/ess/projects/batteries abgerufen hat, ist bekannt, dass es Flussbatterien gibt, bei denen die von der Spannung gelieferte Batterie einen nennenswerten temperaturabhängigen Beitrag enthält, so dass die Batteriespannung schlichtweg durch Änderung der Temperatur drastisch geändert werden kann. Es ist erläutert, dass die Flussbatterie während des Ladeanteils des Batteriezyklus auf einer niedrigen Temperatur und während des Entladeanteils des Batteriezyklus auf einer hohen Temperatur gehalten werden kann und dadurch die Menge an elektrischer Energie, die von der Batterie geliefert werden kann, maximiert werden kann. Es wird vorgeschlagen, die Elektrolytflüssigkeiten (selbstverständlich über die galvanische Zelle) zwischen Speichertanks hin und her zu pumpen, wobei die Speichertanks auf unterschiedlichen Temperaturen gehalten werden.

### Zusammenfassung der Erfindung

Die Aufgabe der vorliegenden Erfindung besteht darin, eine Ausgestaltung einer elektrischen Energiequelle anzugeben, welche Flussbatterien aufweist und die Temperaturabhängigkeit der Batteriespannungen in vorteilhafter Art und Weise nutzt.

Die Aufgabe wird durch eine elektrische Energiequelle mit den Merkmalen des Anspruchs 1 gelöst. Vorteilhafte Ausgestaltungen der elektrischen Energiequelle sind Gegenstand der abhängigen Ansprüche 2 bis 7.

Erfindungsgemäß wird eine elektrische Energiequelle geschaffen, die zwei Flussbatterien aufweist. Die Flussbatterien weisen - wie alle Batterien - jeweils erste und zweite Pole auf. Vorliegend sind die ersten Pole elektrisch miteinander verbunden und ist an den zweiten Polen ein jeweiliges Nutzpotenzial abgreifbar, wobei die Nutzpotenziale, bezogen auf die ersten Pole, das gleiche Vorzeichen aufweisen. Die beiden Flussbatterien sind also zwar in Serie geschaltet, aber gegeneinander geschaltet, so dass die resultierende Spannung die Differenz der Einzelspannungen der beiden Flussbatterien ist.

Flussbatterien sind derart aufgebaut, dass sie einen Reaktionsraum (= galvanische Zelle) aufweisen. Die Reaktionsräume weisen jeweils eine Membran auf, welche den jeweiligen Reaktionsraum in zwei Fluidräume trennt, wobei die Membranen für einen Übergang elektrischer Ladungsträger zwischen den Fluidräumen des jeweiligen Reaktionsraums permeabel sind. Weiterhin weisen Flussbatterien zwei voneinander getrennte Kreisläufe für eine jeweilige Elektrolytflüssigkeit auf.

Im Rahmen der vorliegenden Erfindung ist vorgesehen, dass die Kreisläufe geschlossene Kreisläufe sind, die je einen der Fluidräume der zwei Reaktionsräume miteinander verbinden, so dass die Elektrolytflüssigkeiten alternierend je einen der Fluidräume des einen Reaktionsraums und je einen der Fluidräume des anderen Reaktionsraums durchströmen. Weiterhin weisen die beiden Kreisläufe eingangsseitig der Reaktionsräume Wärmetauscher auf, mittels derer die Elektrolytflüssigkeiten auf eine jeweilige Temperatur gebracht werden, wobei eine der beiden Temperaturen höher als die andere ist.

Werden die Elektrolytflüssigkeiten durch die Fluidräume geführt, so führt dies zu unterschiedlichen Nutzpotenzialen. Es ist daher möglich, die Nutzpotenziale einer Last zu deren Betrieb zuzuführen, so dass die Last mit einer Leistung betrieben wird, die gleich dem Produkt einer Nutzspannung und eines einheitlichen Stromes ist. Die Nutzspannung ergibt sich durch die Differenz der Nutzpotenziale. Der einheitliche Strom fließt sowohl über die Membranen der beiden Reaktionsräume als auch durch die Last.

Die erfindungsgemäße elektrische Energiequelle kann also thermische Energie ohne Umweg über eine mechanische Energie direkt in elektrische Energie umwandeln. Die erfindungsgemä-ße elektrische Energiequelle ist sozusagen nicht eine Wärmekraftmaschine, sondern eine Wärmestrommaschine.

Eine derartige Wärmestrommaschine kann erheblich kompakter gebaut werden als ein übliches Paar von Flussbatterien. Denn bei der erfindungsgemäßen elektrischen Energiequelle ist es - im Gegensatz zu einer normalen Flussbatterie - nicht erforderlich, größere Speichergefäße vorzusehen, in denen die Elektrolytflüssigkeiten getrennt nach geladener und entladener jeweilige Elektrolytflüssigkeit gespeichert werden. Vielmehr kann beim Betrieb der erfindungsgemä-ßen elektrischen Energiequelle im Reaktionsraum der einen Flussbatterie kontinuierlich ein Laden der einen und ein Entladen der anderen Elektrolytflüssigkeit erfolgen, während gleichzeitig im Reaktionsraum der anderen Flussbatterie kontinuierlich ein Entladen der einen und ein Laden der anderen Elektrolytflüssigkeit erfolgen kann. Dadurch ist ein Speichern der Elektrolytflüssigkeit nicht erforderlich. Vielmehr kann eine jeweilige Elektrolytflüssigkeit nach dem Laden in einem der Reaktionsräume direkt zum unmittelbar nachfolgenden Entladen dem anderen der Reaktionsräume zugeführt werden, worauf dann wieder ein Laden erfolgen kann.

Zum Pumpen der Elektrolytflüssigkeiten durch die geschlossenen Kreisläufe wird zwar eine gewisse Menge an Energie benötigt. Diese Energie ist jedoch oftmals relativ gering. Sie kann insbesondere kleiner als die von der elektrischen Energiequelle insgesamt zur Verfügung gestellte elektrische Energie sein. Auch nach Abzweigen der zum Betrieb der Pumpen benötigten Energie verbleibt also immer noch eine nennenswerte Menge an Energie, die anderweitig genutzt werden kann.

Um die Wärmetauscher eingangsseitig der Reaktionsräume auf ihren Temperaturen zu halten, sind entsprechende Reservoire oder Quellen erforderlich. Hierfür können jedoch oftmals Sachverhalte genutzt werden, die ohnehin gegeben sind. Insbesondere fallen in Industrieanlagen - beispielsweise Anlagen der Stahlindustrie - oftmals in erheblichem Umfang Wärmemengen an, die bisher ungenutzt sind und als Abwärme in die Umgebung abgegeben werden. Derartige Wärmemengen können dafür verwendet werden, um die Elektrolytflüssigkeiten auf die höhere der beiden Temperaturen zu bringen. Auch ein Fernwärmenetz kann genutzt werden. Um die Elektrolytflüssigkeiten auf die niedrigere der beiden Temperaturen zu bringen, kann insbesondere die übliche Umgebung genutzt werden, beispielsweise ein Fluss oder - über einen Kühlturm oder dergleichen - die Luft der Umgebung. Auch die Nutzung beispielsweise des Kühlturms einer Kühlstrecke einer Warmbandstraße ist möglich.

In der einfachsten Ausgestaltung arbeitet die elektrische Energiequelle ausschließlich als Energiequelle, bietet also keine Speichermöglichkeit für elektrische Energie. Es ist jedoch möglich, die elektrische Energiequelle derart auszugestalten, dass auch eine Speicherung elektrischer Energie möglich ist. Dies wird dadurch erreicht, dass die beiden Kreisläufe ausgangsseitig der Reaktionsräume Speichergefäße und Beeinflussungselemente aufweisen, mittels derer die Menge an jeweiliger Elektrolytflüssigkeit einstellbar ist, die von dem Speichergefäß ausgangsseitig des Reaktionsraums der einen Flussbatterie über den Wärmetauscher eingangsseitig des Reaktionsraums der anderen Flussbatterie und den Reaktionsraum der anderen Flussbatterie in das Speichergefäß ausgangsseitig des Reaktionsraums der anderen Flussbatterie transportiert wird, so dass sich ein Füllstand des Speichergefäßes ausgangsseitig des Reaktionsraums der einen Flussbatterie verringert und ein Füllstand des Speichergefäßes ausgangsseitig des Reaktionsraums der anderen Flussbatterie erhöht.

Die Beeinflussungselemente können Pumpen sein. Diese Ausgestaltung ist stets realisierbar. Im Falle von Pumpen kann die jeweils transportierte Menge an Elektrolytflüssigkeit durch die entsprechende Ansteuerung der Pumpen eingestellt werden. Alternativ können je zwei der Beeinflussungselemente Pumpen und Ventile sein. Diese Ausgestaltung ist realisierbar, wenn zwischen den Speichergefäßen eingangsseitig und ausgangsseitig der Ventile ein Höhenunterschied besteht, so dass die jeweilige Elektrolytflüssigkeit bei geöffnetem jeweiligem Ventil bereits durch die Schwerkraft von dem Speichergefäß eingangsseitig des jeweiligen Ventils über den Reaktionsraum ausgangsseitig des jeweiligen Ventils in das Speichergefäß ausgangsseitig des genannten Reaktionsraums fließt. Die Menge an fließender Elektrolytflüssigkeit kann in diesem Fall durch das Ausmaß eingestellt werden, zu dem das jeweilige Ventil geöffnet wird.

Sofern eine derartige Speichermöglichkeit realisiert wird, haben ein Laden und Entladen der elektrischen Energiequelle Einfluss auf die thermische Bilanz des Betriebs der elektrischen Energiequelle. Denn beim Laden und beim Entladen der elektrischen Energiequelle ändert sich auch die Temperatur der Elektrolytflüssigkeiten. Es ist natürlich möglich, diesen Einfluss schlichtweg hinzunehmen. Dadurch verschlechtert sich jedoch die Gesamt-Energiebilanz des elektrischen Energiespeichers. Zur Vermeidung einer derartigen Verschlechterung der Gesamt-Energiebilanz des elektrischen Energiespeichers ist die elektrische Energiequelle daher vorzugsweise derart ausgestaltet,
- dass die elektrische Energiequelle einen Wärmespeicher aufweist, in dem sich ein Speichermedium befindet,
- dass die Wärmetauscher jeweils ein Speiseelement und ein Abnahmeelement aufweisen,
- dass das jeweilige Speiseelement auf der jeweiligen Temperatur gehalten wird, auf welche die jeweilige Elektrolytflüssigkeit mittels des jeweiligen Wärmetauschers gebracht wird, insbesondere ein jeweiliges Fluid durch das jeweilige Speiseelement geführt wird, das beim Zuführen zu dem jeweiligen Speiseelement die jeweilige Temperatur aufweist,
- dass das jeweilige Abnahmeelement von der jeweiligen Elektrolytflüssigkeit durchströmt wird,
   dass die Speiseelemente, die auf der höheren der beiden Temperaturen gehalten werden, ausschließlich in einem oberen Bereich des Wärmespeichers angeordnet sind und die Speiseelemente, die auf der niedrigeren der beiden Temperaturen gehalten werden, ausschließlich in einem unteren Bereich des Wärmespeichers angeordnet sind und
   dass die Abnahmeelemente, mittels derer die jeweilige Elektrolytflüssigkeit auf die höhere der beiden Temperaturen gebracht wird, zumindest in dem oberen Bereich des Wärmespeichers angeordnet sind und die Abnahmeelemente, mittels derer die jeweilige Elektrolytflüssigkeit auf die niedrigere der beiden Temperaturen gebracht wird, zumindest in dem unteren Bereich des Wärmespeichers angeordnet sind.

In diesem Fall können die Einflüsse auf die thermische Bilanz der elektrischen Energiequelle, die beim Laden und beim Entladen auftreten, von dem Wärmespeicher abgefangen und gepuffert werden.

Vorzugsweise sind die Speiseelemente, die auf der höheren der beiden Temperaturen gehalten werden, zu einem gemeinsamen Speiseelement zusammengefasst und sind auch die Speiseelemente, die auf der niedrigeren der beiden Temperaturen gehalten werden, zu einem gemeinsamen Speiseelement zusammengefasst. Dadurch vereinfacht sich die Gesamtkonstruktion der elektrischen Energiequelle. Die Abnahmeelemente müssen natürlich zumindest bezüglich der Elektrolytströme voneinander getrennt bleiben, da anderenfalls keine getrennten Kreisläufe mehr vorliegen würden. In mechanisch-konstruktiver Hinsicht können gegebenenfalls auch sie zusammengefasst seien.

Vorzugsweise ist vorgesehen,
- dass die Abnahmeelemente sich innerhalb des Wärmespeichers von dem oberen Bereich des Wärmespeichers bis zu dem unteren Bereich des Wärmespeichers erstrecken,
- dass die Abnahmeelemente, mittels derer die jeweilige Elektrolytflüssigkeit auf die höhere der beiden Temperaturen gebracht wird, von der jeweiligen Elektrolytflüssigkeit innerhalb des Wärmespeichers von unten nach oben durchströmt werden und
- dass die Abnahmeelemente, mittels derer die jeweilige Elektrolytflüssigkeit auf die niedrigere der beiden Temperaturen gebracht wird, von der jeweiligen Elektrolytflüssigkeit innerhalb des Wärmespeichers von oben nach unten durchströmt werden.

Durch diese Ausgestaltung wird die Effizienz des Wärmespeichers maximiert.

Es ist möglich, dass die beiden Kreisläufe zwischen den eingangsseitig der Reaktionsräume der Flussbatterien angeordneten Wärmetauschern und dem Reaktionsraum der jeweils anderen Flussbatterie weitere Wärmetauscher aufweisen, mittels derer die Temperaturen der Elektrolytflüssigkeiten des jeweiligen Kreislaufs einander angenähert werden. Diese Ausgestaltung kann insbesondere dann sinnvoll sein, wenn die elektrische Energiequelle ausschließlich als elektrische Energiequelle (also ohne Speichermöglichkeit) betrieben werden soll.

Vorzugsweise werden hierbei die weiteren Wärmetauscher jeweils von einer Elektrolytflüssigkeit, die dem Wärmetauscher vor dem Reaktionsraum der einen Flussbatterie zugeführt wird, und einer Elektrolytflüssigkeit, die dem Wärmetauscher vor dem Reaktionsraum der anderen Flussbatterie zugeführt wird, durchströmt.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: eine elektrische Energiequelle,
- FIG 2: eine weiteren elektrische Energiequelle und
- FIG 3: Temperaturverläufe.

### Beschreibung der Ausführungsformen

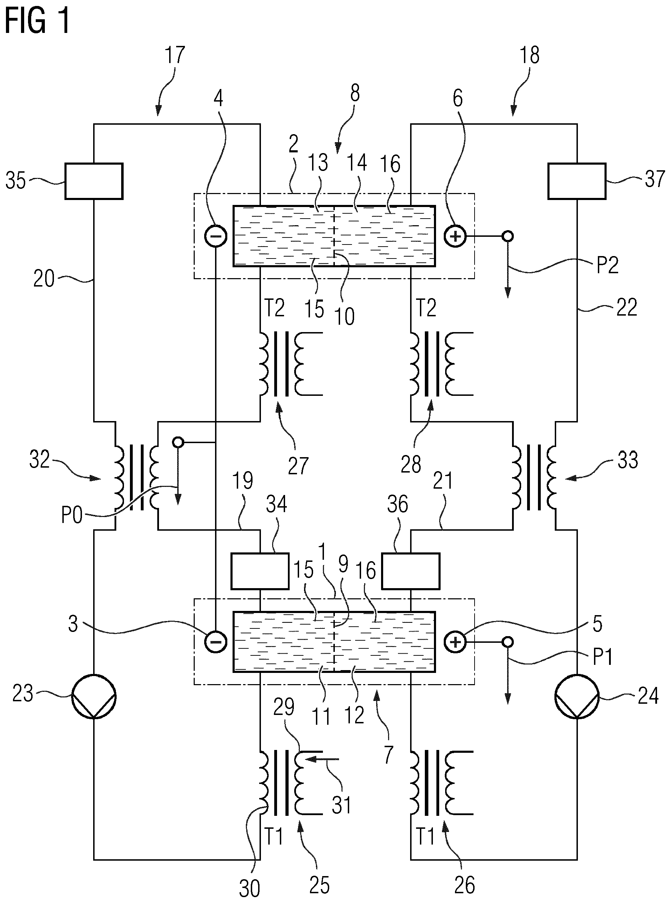

Gemäß FIG 1 weist eine elektrische Energiequelle zwei Flussbatterien 1, 2 auf. Die beiden Flussbatterien 1, 2 weisen jeweils erste Pole 3, 4 und zweite Pole 5, 6 auf. Die ersten Pole 3, 4 sind elektrisch miteinander verbunden. An den zweiten Polen 5, 6 ist ein jeweiliges Nutzpotenzial P1, P2 abgreifbar. Die beiden Nutzpotenziale P1, P2 weisen, bezogen auf die ersten Pole 3, 4 (bzw. das entsprechende gemeinsame Potenzial P0), das gleiche Vorzeichen auf. Gemäß der Darstellung in FIG 1 sind die beiden Nutzpotenziale P1, P2 positiv, also größer als das gemeinsame Potenzial P0. Es könnte aber auch umgekehrt sein.

Die beiden Flussbatterien 1, 2 weiterhin jeweils einen Reaktionsraum 7, 8 auf. Die Reaktionsräume 7, 8 weisen jeweils eine Membran 9, 10 auf. Die jeweilige Membran 9, 10 trennt den jeweiligen Reaktionsraum 7, 8 in zwei Fluidräume 11, 12 bzw. 13, 14. Die Membranen 9, 10 sind zwar für einen Übergang elektrischer Ladungsträger zwischen den Fluidräumen 11, 12 bzw. 13, 14 des jeweiligen Reaktionsraums 7, 8 permeabel. Sie sind hingegen nicht permeabel für in den Fluidräumen 11 bis 14 befindliche Elektrolytflüssigkeiten 15, 16.

Die elektrische Energiequelle weist weiterhin zwei voneinander getrennte Kreisläufe 17, 18 auf. Die beiden Kreisläufe 17, 18 sind geschlossene Kreisläufe. In ihnen zirkuliert je eine der beiden Elektrolytflüssigkeiten 15, 16. Der eine Kreislauf 17 verbindet die Fluidräume 11 und 13 miteinander. Die Verbindung ist derart, dass die Elektrolytflüssigkeit 15 zunächst über einen Leitungsabschnitt 19 vom Fluidraum 11 zum Fluidraum 13 geführt wird und sodann über einen Leitungsabschnitt 20 vom Fluidraum 13 zum Fluidraum 11 geführt wird. Der andere Kreislauf 18 verbindet die Fluidräume 12 und 14 miteinander. Die Verbindung ist derart, dass die Elektrolytflüssigkeit 16 zunächst über einen Leitungsabschnitt 21 vom Fluidraum 12 zum Fluidraum 14 geführt wird und sodann über einen Leitungsabschnitt 22 vom Fluidraum 14 zum Fluidraum 12 geführt wird. Im Ergebnis durchströmen dadurch die Elektrolytflüssigkeiten 15, 16 alternierend je einen der Fluidräume 11, 12 des einen Reaktionsraums 7 und je einen der Fluidräume 13, 14 des anderen Reaktionsraums 8. Für das Fördern der Elektrolytflüssigkeiten 15, 16 erforderliche Pumpen 23, 24 werden stets beide und gleichartig betrieben. Sie können an prinzipiell beliebigen Stellen der Kreisläufe 17, 18 angeordnet sein. Die dargestellte Anordnung in den Leitungsabschnitten 20 und 22 ist nicht zwingend. Sie könnten ebenso auch in den Leitungsabschnitten 19 und 21 angeordnet sein.

Wenn die Elektrolytflüssigkeit 15 den Fluidraum 11 durchfließt, wird sie entweder oxidiert oder reduziert. Wenn die Elektrolytflüssigkeit 15 im Fluidraum 11 oxidiert wird, wird die Elektrolytflüssigkeit 16 im Fluidraum 12 reduziert, wird die Elektrolytflüssigkeit 15 im Fluidraum 13 reduziert und wird die Elektrolytflüssigkeit 16 im Fluidraum 14 oxidiert. Wenn die Elektrolytflüssigkeit 15 im Fluidraum 11 hingegen reduziert wird, wird die Elektrolytflüssigkeit 16 im Fluidraum 12 oxidiert, wird die Elektrolytflüssigkeit 15 im Fluidraum 13 oxidiert und wird die Elektrolytflüssigkeit 16 im Fluidraum 14 reduziert.

Die beiden Kreisläufe 17, 18 weisen eingangsseitig der Reaktionsräume 7, 8 Wärmetauscher 25 bis 28 auf. Mittels der Wärmetauscher 25 und 26 werden die Elektrolytflüssigkeiten 15, 16 auf eine Temperatur T1 gebracht. Mittels der Wärmetauscher 27 und 28 werden die Elektrolytflüssigkeiten 15, 16 auf eine Temperatur T2 gebracht. Die Temperatur T2 ist höher als die Temperatur T1.

Nachstehend wird der Aufbau des Wärmetauschers 25 näher erläutert. Für die anderen Wärmetauscher 26 bis 28 gelten analoge Ausführungen.

Gemäß FIG 1 weist der Wärmetauscher 25 ein Speiseelement 29 und ein Abnahmeelement 30 auf. Das Speiseelement 29 wird auf der Temperatur T1 gehalten, also auf derjenigen Temperatur, auf welche die Elektrolytflüssigkeit 15 mittels des Wärmetauschers 25 gebracht wird. Insbesondere ist es möglich, dass zu diesem Zweck ein Fluid 31 durch das Speiseelement 29 geführt wird, welches beim Zuführen zu dem Speiseelement 29 die Temperatur T1 aufweist. Das Abnahmeelement 30 ist Bestandteil des Kreislaufs 17. Es wird von der Elektrolytflüssigkeit 15 durchströmt. Das Speiseelement 29 und das Abnahmeelement 30 sind thermisch miteinander gekoppelt, so dass die Temperatur T1 des Speiseelements 29 auf die Elektrolytflüssigkeit 15 übertragen wird.

Um im Ergebnis unterschiedliche Potenziale P1, P2 liefern zu können, müssen die Potenziale P1, P2, bezogen auf das gemeinsame Potenzial P0, in nennenswertem Umfang von der Temperatur T1, T2 im jeweiligen Reaktionsraum 7, 8 abhängen. Entsprechende Elektrolytflüssigkeiten 15, 16 sind bekannt. Rein beispielhaft seien die Elektrolytflüssigkeiten genannt, die in einem Vanadium-Redox-Akkumulator verwendet werden.

Soweit bisher erläutert, entspricht die Ausgestaltung der elektrischen Energiequelle von FIG 1 dem Grundprinzip. Zusätzlich sind in FIG 1 jedoch weitere Ausgestaltungen der elektrischen Energiequelle dargestellt.

Insbesondere weisen die beiden Kreisläufe 17, 18 zwischen den eingangsseitig der Reaktionsräume 7, 8 der Flussbatterien 1, 2 angeordneten Wärmetauschern 25 bis 28 und dem Reaktionsraum 8, 7 der jeweils anderen Flussbatterie 2, 1 weitere Wärmetauscher 32, 33 auf. Mittels der weiteren Wärmetauscher 32, 33 werden die Temperaturen der Elektrolytflüssigkeiten 15, 16 des jeweiligen Kreislaufs 17, 18 einander angenähert. Vorzugsweise wird zu diesem Zweck der Wärmetauscher 32 einerseits von der Elektrolytflüssigkeit 15 durchströmt, die in dem Leitungsabschnitt 19 von dem Reaktionsraum 7 zum Reaktionsraum 8 strömt, und andererseits von der Elektrolytflüssigkeit 15, die in dem Leitungsabschnitt 20 von dem Reaktionsraum 8 zum Reaktionsraum 7 strömt, durchströmt. In analoger Weise wird zu diesem Zweck der Wärmetauscher 33 einerseits von der Elektrolytflüssigkeit 16, die in dem Leitungsabschnitt 21 von dem Reaktionsraum 7 zum Reaktionsraum 8 strömt, und andererseits von der Elektrolytflüssigkeit 16, die in dem Leitungsabschnitt 22 von dem Reaktionsraum 8 zum Reaktionsraum 7 strömt, durchströmt.

In FIG 1 sind weiterhin ausgangsseitig der Reaktionsräume 7, 8 Speichergefäße 34 bis 37 dargestellt. Die Speichergefäße 34 bis 37 sind Bestandteile der Kreisläufe 17, 18. Die Speichergefäße 34 bis 37 können bei der Ausgestaltung gemäß FIG 1 jedoch gegebenenfalls entfallen oder alternativ sehr klein dimensioniert sein.

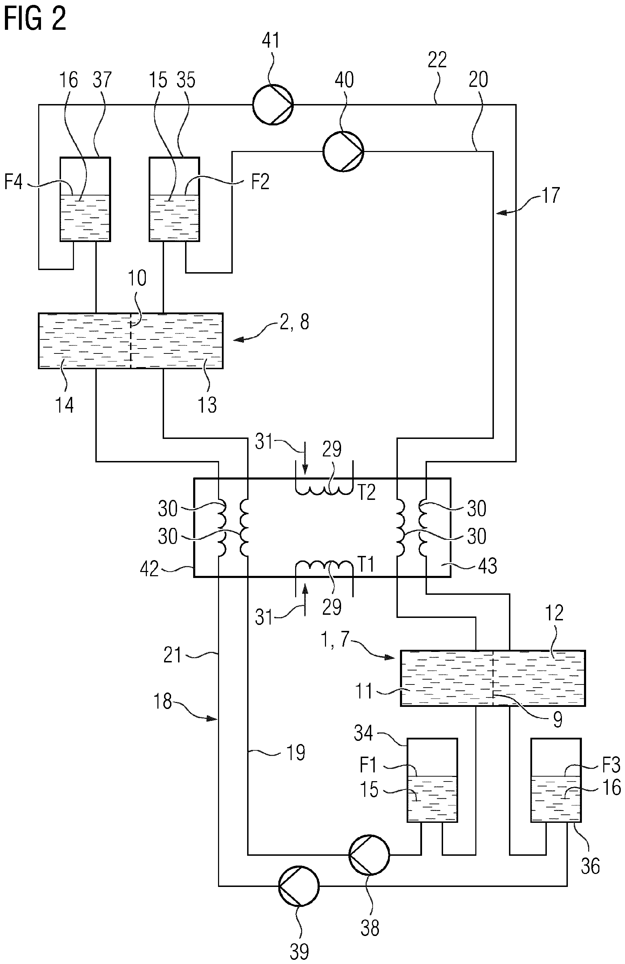

In Verbindung mit FIG 2 wird nachstehend eine weitere Ausgestaltung einer elektrischen Energiequelle erläutert. Auch die elektrische Energiequelle gemäß FIG 2 ist erfindungsgemäß ausgestaltet. Die obenstehenden Erläuterungen, die in Verbindung mit FIG 1 zum Grundprinzip der vorliegenden Erfindung getroffen wurden, sind also auch hier gültig. In FIG 2 sind jedoch die Pole 3 bis 6 und auch die Potenziale P0, P1 und P2 nicht mit eingezeichnet, da diese für das Verständnis der Modifikationen der Ausgestaltung von FIG 2 gegenüber der Ausgestaltung von FIG 1 nicht erforderlich sind.

Bei der Ausgestaltung gemäß FIG 2 sind die Speichergefäße 34 bis 37 ausgangsseitig der Reaktionsräume 7, 8 stets vorhanden. Weiterhin weisen die beiden Kreisläufe 17, 18 - anstelle der Pumpen 23, 24 - ausgangsseitig der Reaktionsräume 7, 8 Beeinflussungselemente 38 bis 41 auf. Die Beeinflussungselemente 38 bis 41 können den Speichergefäßen 34 bis 37 entsprechend der Darstellung in FIG 2 nachgeordnet sein. Alternativ können die Beeinflussungselemente 38 bis 41 den Speichergefäßen 34 bis 37 vorgeordnet sein.

Die Beeinflussungselemente 38 bis 41 können gemeinsam und gleichartig betrieben werden. In diesem Fall arbeitet die elektrische Energiequelle auf die gleiche Art und Weise wie vorstehend in Verbindung mit FIG 1 erläutert. Die Beeinflussungselemente 38 bis 41 können aber auch nur paarweise gleichartig betrieben werden. Insbesondere werden zwar die Beeinflussungselemente 38 und 39 stets gemeinsam und gleichartig betrieben und werden auch die Beeinflussungselemente 40 und 41 stets gemeinsam und gleichartig betrieben. Der Betrieb der Beeinflussungselemente 38 und 39 einerseits kann jedoch unabhängig vom Betrieb der Beeinflussungselemente 40 und 41 gewählt werden.

Nachfolgend wird zunächst erläutert, was geschieht, wenn ausschließlich das Beeinflussungselement 38 und das Beeinflussungselement 39 betrieben werden.

In diesem Fall wird mittels dem Beeinflussungselement 38 die Elektrolytflüssigkeit 15 von dem Speichergefäß 34 ausgangsseitig des Reaktionsraums 7 über das Abnahmeelement 30 des Wärmetauschers 27 (vergleiche FIG 1) eingangsseitig des Reaktionsraums 8 und den Reaktionsraum 8 selbst in das Speichergefäß 35 transportiert. Dadurch verringert sich ein Füllstand F1 des Speichergefäßes 34. Im gleichen Ausmaß erhöht sich ein Füllstand F2 des Speichergefäßes 35. In analoger Weise wird mittels des Beeinflussungselements 39 die Elektrolytflüssigkeit 16 von dem Speichergefäß 36 ausgangsseitig des Reaktionsraums 7 über das Abnahmeelement 30 des Wärmetauschers 28 (vergleiche FIG 1) eingangsseitig des Reaktionsraums 8 und den Reaktionsraum 8 selbst in das Speichergefäß 37 transportiert. Dadurch verringert sich ein Füllstand F3 des Speichergefäßes 36. Im gleichen Ausmaß erhöht sich ein Füllstand F4 des Speichergefäßes 37. Somit wird im Ergebnis zwar die Flussbatterie 2 betrieben, nicht aber die Flussbatterie 1. Dadurch wird der Ladungszustand der elektrischen Energiequelle verringert. Es wird also der elektrischen Energiequelle Ladung entnommen.

Wenn die Beeinflussungselemente 40 und 41 betrieben werden, erfolgt der umgekehrte Vorgang. Dadurch wird der Ladungszustand der elektrischen Energiequelle erhöht. Der elektrischen Energiequelle wird also Ladung zugeführt.

Die Erweiterung des Grundprinzips um die Speichergefäße 34 bis 37 und die Beeinflussungselemente 38 bis 41 bewirkt also, dass die elektrische Energiequelle - zusätzlich zu einer reinen elektrischen Energiequelle - auch als elektrischer Energiespeicher genutzt werden kann.

Die elektrische Energiequelle ist somit in drei "reinen" Betriebsweisen betreibbar. Bei der ersten dieser "reinen" Betriebsweisen werden alle vier Beeinflussungselemente 38 bis 41 gleichartig betrieben. Diese "reine" Betriebsweise ist im Kern auch die Betriebsweise der elektrischen Energiequelle von FIG 1. Bei der zweiten dieser "reinen" Betriebsweisen werden ausschließlich die Beeinflussungselemente 38 und 39 betrieben, und zwar gleichartig. Die Beeinflussungselemente 40 und 41 werden bei dieser Betriebsweise nicht betrieben. Bei der dritten dieser "reinen" Betriebsweisen ist es umgekehrt. Hier werden ausschließlich die Beeinflussungselemente 40 und 41 betrieben, und zwar gleichartig. Die Beeinflussungselemente 38 und 39 werden bei dieser Betriebsweise nicht betrieben. Diese beiden weiteren "reinen" Betriebsweisen sind zwar bei der elektrischen Energiequelle von FIG 2 möglich, nicht aber bei der elektrischen Energiequelle von FIG 1. Zusätzlich zu diesen "reinen" Betriebsweisen ist bei der elektrischen Energiequelle von FIG 2 auch ein Mischbetrieb möglich, bei dem zwar alle vier Beeinflussungselemente 38 bis 41 betrieben werden, jedoch die Beeinflussungselemente 38 und 39 stärker oder schwächer als die Beeinflussungselemente 40 und 41 angesteuert werden.

In der Darstellung gemäß FIG 2 sind alle vier Beeinflussungselemente 38 bis 41 als Pumpen ausgebildet. Gegebenenfalls können aber auch je zwei der Beeinflussungselemente 38 bis 41 als Pumpen und als Ventile ausgebildet sein. Diese Ausgestaltung ist nicht separat dargestellt.

Zur Optimierung der thermischen Energiebilanz weist die elektrische Energiequelle entsprechend der Darstellung in FIG 2 weiterhin einen Wärmespeicher 42 auf. In dem Wärmespeicher 42 befindet sich ein Speichermedium 43, beispielsweise ein Thermoöl oder Wasser oder ein bei einer niedrigen Temperatur schmelzendes Salz, beispielsweise Natriumacetat-Trihydrat, Natriumsulfat, Natriumhydroxid oder Alaun. Der Schmelzpunkt des Speichermediums 43 kann zwischen den beiden Temperaturen T1, T2 liegen. Der Schmelzpunkt des Speichermediums 43 kann aber auch unter der Temperatur T1 liegen. Weiterhin sollte eine Siedetemperatur des Speichermediums 43 nach Möglichkeit über der Temperatur T2 liegen. Es sind aber Ausnahmen von diesen Regeln möglich.

Bei der Ausgestaltung gemäß FIG 2 sind die Speiseelemente 29, die auf der Temperatur T2 gehalten werden, ausschließlich in einem oberen Bereich des Wärmespeichers 42 angeordnet. Umgekehrt sind die Speiseelemente 29, die auf der Temperatur T1 gehalten werden, ausschließlich in einem unteren Bereich des Wärmespeichers 42 angeordnet. Die Abnahmeelemente 30, mittels derer die Elektrolytflüssigkeiten 15, 16 auf die Temperatur T2 gebracht werden, sind zumindest in dem oberen Bereich des Wärmespeichers 42 angeordnet. Umgekehrt sind die Abnahmeelemente 30, mittels derer die Elektrolytflüssigkeiten 15, 16 auf die Temperatur T1 gebracht werden, zumindest in dem unteren Bereich des Wärmespeichers 42 angeordnet.

Vorzugsweise sind die Abnahmeelemente 30 nicht ausschließlich in dem oberen bzw. dem unteren Bereich des Wärmespeichers 42 angeordnet, sondern erstrecken sich entsprechend der Darstellung in FIG 2 innerhalb des Wärmespeichers 42 von dem oberen Bereich des Wärmespeichers 42 bis zu dem unteren Bereich des Wärmespeichers 42. In diesem Fall werden die Abnahmeelemente 30, mittels derer die Elektrolytflüssigkeiten 15, 16 auf die Temperatur T2 gebracht werden, von den Elektrolytflüssigkeiten 15, 16 innerhalb des Wärmespeichers 42 von unten nach oben durchströmt. Umgekehrt werden in diesem Fall die Abnahmeelemente 30, mittels derer die Elektrolytflüssigkeiten 15, 16 auf die Temperatur T1 gebracht werden, von den Elektrolytflüssigkeiten 15, 16 innerhalb des Wärmespeichers 42 von oben nach unten durchströmt.

Entsprechend der Darstellung in FIG 2 sind weiterhin die Speiseelemente 29, die auf der Temperatur T2 gehalten werden, zu einem gemeinsamen Speiseelement zusammengefasst. Ebenso sind auch die Speiseelemente 29, die auf der Temperatur T1 gehalten werden, zu einem gemeinsamen Speiseelement zusammengefasst.

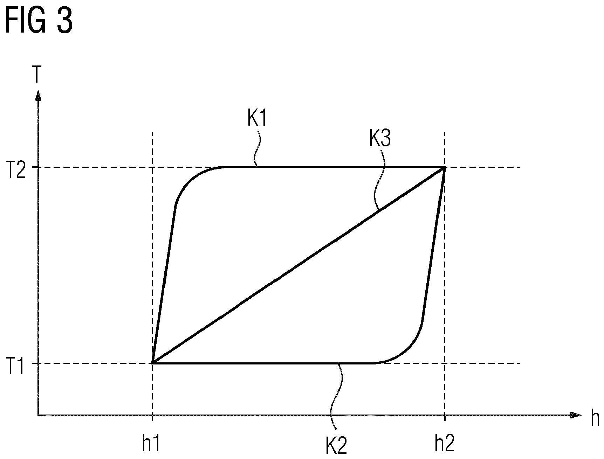

Bei einer elektrischen Energiequelle, die einen Wärmespeicher 42 aufweist, hängt die Temperaturschichtung des Speichermediums 43 in dem Wärmespeicher 42 von dem Ausmaß ab, in dem die elektrische Energiequelle geladen bzw. entladen ist. Dies wird nachstehend in Verbindung mit FIG 3 erläutert, in der die Temperatur des Speichermediums 43 als Funktion der Höhe h innerhalb des Wärmespeichers 42 dargestellt ist.

In FIG 3 ist mit h1 die tiefste Stelle des Wärmespeichers 42 bezeichnet, mit h2 die höchste Stelle. Im unteren Bereich des Wärmespeichers 42, also am Ort des entsprechenden Speiseelements 29, weist das Speichermedium 43 stets die Temperatur T1 auf. In analoger Weise weist das Speichermedium 43 im oberen Bereich des Wärmespeichers 42, also am Ort des entsprechenden Speiseelements 29, stets die Temperatur T2 auf. Der Temperaturverlauf dazwischen hängt jedoch davon ab, ob die elektrische Energiequelle geladen bzw. entladen ist. Ist die elektrische Energiequelle vollständig geladen, so sind die Füllstände F1 und F3 maximal und die Füllstände F2 und F4 minimal. In diesem Fall stellt sich ein Temperaturverlauf in etwa entsprechend der Kurve K1 ein. Die Wärmeenergie befindet sich im wesentlichen im Wärmespeicher 42. Ist die elektrische Energiequelle vollständig entladen, so sind die Füllstände F1 und F3 minimal und die Füllstände F2 und F4 maximal. In diesem Fall stellt sich ein Temperaturverlauf in etwa entsprechend der Kurve K2 ein. Die Wärmeenergie befindet sich im wesentlichen in den Elektrolytflüssigkeiten 15, 16. Ist die elektrische Energiequelle weder vollständig geladen noch vollständig entladen stellt sich ein Temperaturverlauf zwischen den Kurven K1 und K2 ein, beispielsweise in etwa entsprechend der Kurve K3. Auch die Füllstände F1 bis F4 liegen zwischen ihren Minimal- und Maximalwerten.

Die vorliegende Erfindung weist viele Vorteile auf. Insbesondere kann auf einfache Art und Weise - nämlich ohne Umweg über eine Kraftmaschine, die einen Generator antreibt - anhand einer Temperaturdifferenz elektrische Energie erzeugt werden. Die Wirkungsweise ist ähnlich dem Carnotschen Kreisprozess. Die elektrische Energiequelle kann - zumindest in manchen Fällen - auch dann noch elektrische Energie liefern, wenn der Betrieb einer Wärmekraftmaschine mit entsprechenden Temperaturdifferenzen nicht mehr möglich wäre. Im Falle der Ausgestaltung gemäß FIG 2 sind weiterhin auch ein Speichern und ein Abgeben elektrischer Energie möglich. Weiterhin kann bei der Ausgestaltung gemäß FIG 2 zwischen den verschiedenen Betriebsweisen sehr schnell, also hochdynamisch, umgeschaltet werden. Weiterhin können derartige Flussbatterien 1, 2 auch kaskadiert und weitere Schleifen mit Wärmetauschern 25 bis 28 in den Wärmespeicher 42 eingebaut werden, um auch bei einem mehrfachen Durchlauf durch Flussbatterien 1, 2 die Elektrolyten 15, 16 immer wieder auf ihre jeweilige Zieltemperatur T1 bzw. T2 bringen zu können.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1, 2: Flussbatterien
- 3 bis 6: Pole
- 7, 8: Reaktionsräume
- 9, 10: Membranen
- 11 bis 14: Fluidräume
- 15, 16: Elektrolytflüssigkeiten
- 17, 18: Kreisläufe
- 19 bis 22: Leitungsabschnitte
- 23, 24: Pumpen
- 25 bis 28: Wärmetauscher
- 29: Speiseelement
- 30: Abnahmeelement
- 31: Fluid
- 32, 33: weitere Wärmetauscher
- 34 bis 37: Speichergefäße
- 38 bis 41: Beeinflussungselemente
- 42: Wärmespeicher
- 43: Speichermedium

- F1 bis F4: Füllstände
- h, h1, h2: Höhen
- K1, K2, K3: Kurven
- P0, P1, P2: Potenziale
- T1, T2: Temperaturen

## Patentansprüche

1. Elektrische Energiequelle,
- wobei die elektrische Energiequelle zwei Flussbatterien (1, 2) aufweist,
- wobei die Flussbatterien (1, 2) jeweils erste und zweite Pole (3 bis 6) aufweisen,
- wobei die ersten Pole (3, 4) elektrisch miteinander verbunden sind und an den zweiten Polen (5, 6) ein jeweiliges Nutzpotenzial (P1, P2) abgreifbar ist,
- wobei die Nutzpotenziale (P1, P2), bezogen auf die ersten Pole (3, 4), das gleiche Vorzeichen aufweisen,
- wobei die beiden Flussbatterien (1, 2) jeweils einen Reaktionsraum (7, 8) aufweisen,
- wobei die Reaktionsräume (7, 8) jeweils eine Membran (9, 10) aufweisen, welche den jeweiligen Reaktionsraum (7, 8) in zwei Fluidräume (11 bis 14) trennt,
- wobei die Membranen (9, 10) für einen Übergang elektrischer Ladungsträger zwischen den Fluidräumen (11 bis 14) des jeweiligen Reaktionsraums (7, 8) permeabel sind,
- wobei die elektrische Energiequelle zwei voneinander getrennte Kreisläufe (17, 18) für eine jeweilige Elektrolytflüssigkeit (15, 16) aufweist,
- wobei die Kreisläufe (17, 18) geschlossene Kreisläufe sind, die je einen der Fluidräume (11, 14) der zwei Reaktionsräume (7, 8) miteinander verbinden, so dass die Elektrolytflüssigkeiten (15, 16) alternierend je einen der Fluidräume (11, 12) des einen Reaktionsraums (7) und je einen der Fluidräume (13, 14) des anderen Reaktionsraums (8) durchströmen,
- wobei die beiden Kreisläufe (17, 18) eingangsseitig der Reaktionsräume (7, 8) Wärmetauscher (25 bis 28) aufweisen, mittels derer die Elektrolytflüssigkeiten (15, 16) auf eine jeweilige Temperatur (T1, T2) gebracht werden,
- wobei eine der beiden Temperaturen (T1, T2) höher als die andere ist.

2. Elektrische Energiequelle nach Anspruch 1,
**dadurch gekennzeichnet,**
**dass** die beiden Kreisläufe (17, 18) ausgangsseitig der Reaktionsräume (7, 8) Speichergefäße (34 bis 37) und Beeinflussungselemente (38 bis 41) aufweisen, mittels derer die Menge an jeweiliger Elektrolytflüssigkeit (15, 16) einstellbar ist, die von dem Speichergefäß (34, 36) ausgangsseitig des Reaktionsraums (7) der einen Flussbatterie (1) über den Wärmetauscher (27, 28) eingangsseitig des Reaktionsraums (8) der anderen Flussbatterie (2) und den Reaktionsraum (8) der anderen Flussbatterie (2) in das Speichergefäß (35, 37) ausgangsseitig des Reaktionsraums (8) der anderen Flussbatterie (2) transportiert wird, so dass sich ein Füllstand (F1, F3) des Speichergefäßes (34, 36) ausgangsseitig des Reaktionsraums (7) der einen Flussbatterie (1) verringert und ein Füllstand (F2, F4) des Speichergefäßes (35, 37) ausgangsseitig des Reaktionsraums (8) der anderen Flussbatterie (2) erhöht.

3. Elektrische Energiequelle nach Anspruch 1 oder 2,
**dadurch gekennzeichnet,**
- **dass** die elektrische Energiequelle einen Wärmespeicher (42) aufweist, in dem sich ein Speichermedium (43) befindet,
- **dass** die Wärmetauscher (25 bis 28) jeweils ein Speiseelement (29) und ein Abnahmeelement (30) aufweisen,
- **dass** das jeweilige Speiseelement (29) auf der jeweiligen Temperatur (T1, T2) gehalten wird, auf welche die jeweilige Elektrolytflüssigkeit (15, 16) mittels des jeweiligen Wärmetauschers (25 bis 28) gebracht wird, insbesondere ein jeweiliges Fluid (31) durch das jeweilige Speiseelement (29) geführt wird, das beim Zuführen zu dem jeweiligen Speiseelement (29) die jeweilige Temperatur (T1, T2) aufweist,
- **dass** das jeweilige Abnahmeelement (30) von der jeweiligen Elektrolytflüssigkeit (15, 16) durchströmt wird,
**dass** die Speiseelemente (29), die auf der höheren der beiden Temperaturen (T1, T2) gehalten werden, ausschließlich in einem oberen Bereich des Wärmespeichers (42) angeordnet sind und die Speiseelemente (29), die auf der niedrigeren der beiden Temperaturen (T1, T2) gehalten werden, ausschließlich in einem unteren Bereich des Wärmespeichers (42) angeordnet sind und
**dass** die Abnahmeelemente (30), mittels derer die jeweilige Elektrolytflüssigkeit (15, 16) auf die höhere der beiden Temperaturen (T1, T2) gebracht wird, zumindest in dem oberen Bereich des Wärmespeichers (42) angeordnet sind und die Abnahmeelemente (30), mittels derer die jeweilige Elektrolytflüssigkeit (15, 16) auf die niedrigere der beiden Temperaturen (T1, T2) gebracht wird, zumindest in dem unteren Bereich des Wärmespeichers (42) angeordnet sind.

4. Elektrische Energiequelle nach Anspruch 3,
**dadurch gekennzeichnet,**
**dass** die Speiseelemente (29), die auf der höheren der beiden Temperaturen (T1, T2) gehalten werden, zu einem gemeinsamen Speiseelement (29) zusammengefasst sind und die Speiseelemente (29), die auf der niedrigeren der beiden Temperaturen (T1, T2) gehalten werden, zu einem gemeinsamen Speiseelement (29) zusammengefasst sind.

5. Elektrische Energiequelle nach Anspruch 3 oder 4,
**dadurch gekennzeichnet,**
- **dass** die Abnahmeelemente (30) sich innerhalb des Wärmespeichers (42) von dem oberen Bereich des Wärmespeichers (42) bis zu dem unteren Bereich des Wärmespeichers (42) erstrecken,
- **dass** die Abnahmeelemente (30), mittels derer die jeweilige Elektrolytflüssigkeit (15, 16) auf die höhere der beiden Temperaturen (T1, T2) gebracht wird, von der jeweiligen Elektrolytflüssigkeit (15, 16) innerhalb des Wärmespeichers (42) von unten nach oben durchströmt werden und
- **dass** die Abnahmeelemente (30), mittels derer die jeweilige Elektrolytflüssigkeit (15, 16) auf die niedrigere der beiden Temperaturen (T1, T2) gebracht wird, von der jeweiligen Elektrolytflüssigkeit (15, 16) innerhalb des Wärmespeichers (42) von oben nach unten durchströmt werden.

6. Elektrische Energiequelle nach Anspruch 1,
**dadurch gekennzeichnet,**
**dass** die beiden Kreisläufe (17, 18) zwischen den eingangsseitig der Reaktionsräume (7, 8) der Flussbatterien (1, 2) angeordneten Wärmetauschern (25 bis 28) und dem Reaktionsraum (8, 7) der jeweils anderen Flussbatterie (2, 1) weitere Wärmetauscher (32, 33) aufweisen, mittels derer die Temperaturen der Elektrolytflüssigkeiten (15, 16) des jeweiligen Kreislaufs (17, 18) einander angenähert werden.

7. Elektrische Energiequelle nach Anspruch 6,
**dadurch gekennzeichnet,**
**dass** die weiteren Wärmetauscher (32, 33) jeweils von einer Elektrolytflüssigkeit (15, 16), die dem Wärmetauscher (25, 26) vor dem Reaktionsraum (7) der einen Flussbatterie (1) zugeführt wird, und einer Elektrolytflüssigkeit (15, 16), die dem Wärmetauscher (27, 28) vor dem Reaktionsraum (8) der anderen Flussbatterie (2) zugeführt wird, durchströmt werden.
